# EUROPEAN PATENT APPLICATION

(11) **EP 2 383 636 A1**
(43) Date of publication of application: **02.11.2011**
(21) Application number: 10161467.5
(22) Date of filing: 29.04.2010
(51) Int. Cl.: G06F 3/048, H04M 1/67

(54) **Screen unlocking method and electronic apparatus thereof**

(71) Applicant: Acer Incorporated, Taipei County (TW)
(72) Inventor: Tsai, Chieh-Chih, TAIPEI COUNTY (TW); Feng, Yu-Mao, TAIPEI COUNTY (TW); Huang, Po-Yuan, TAIPEI COUNTY (TW)
(74) Representative: Ilgart, Jean-Christophe

(57) **Abstract**

The present invention discloses an electronic apparatus and a screen unlocking method thereof, the electronic apparatus comprises a touch-controlled screen and a control module, and the screen unlocking method comprises the steps of displaying a first frame having a movable icon which shows a part of a second frame over the second frame on the touch-controlled screen: touching the icon and dragging the icon with a random direction and a random dragging path, and the part of the second frame shown by the icon being enlarged or reduced according to the direction and the dragging path; determining if a dragging-condition of the icon is matched with any one of the unlocking-conditions; and displaying the whole second frame when the dragging-condition of the dragged icon is matched with one of the unlocking-conditions.

## Description

### Field

The exemplary embodiment(s) of the present invention relates to a field of screen unlocking method. More specifically. the exemplary embodiment(s) of the present invention relates to a screen unlocking method for unlocking the screen of an electronic apparatus having a touch-controlled display.

### Background

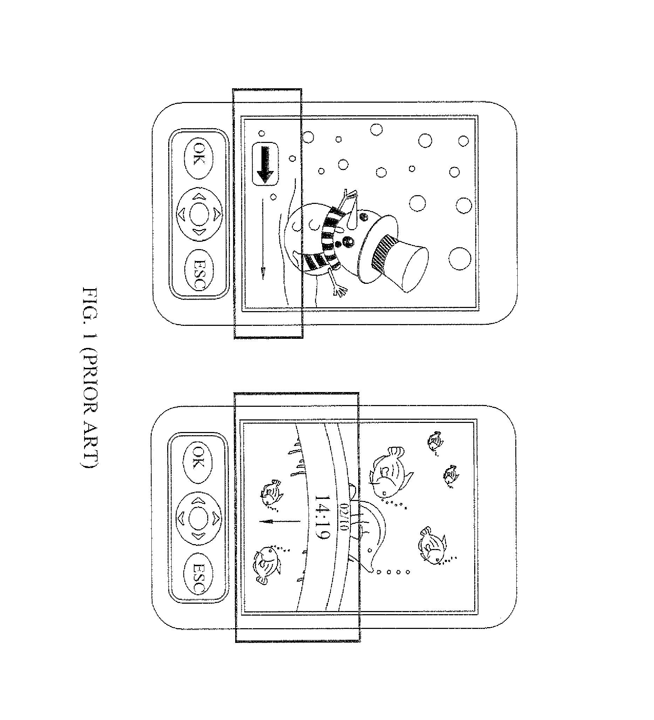

The conventional touch-controlled screen unlocking method unlocks a touch-controlled screen by firstly touching a specific icon shown on the touch-controlied screen then dragging the icon with a limited direction and distance, and then the screen saving image disappears and a common working desktop is shown on the touch-controlled screen. Please refer to figure 1, which is a schematic diagram that illustrates the conventional touch-controlled screen unlocking method. As shown on the left portion of figure 1, a user can unlock the touch-controlled screen after touching the arrow icon and then dragging the icon shown on the screen toward right; or as shown on the right portion of figure 1, the user can unlock the touch-controlled screen after touching the clock icon and then downward dragging the icon shown on the screen. and then the screen can be unlocked and the desktop is shown on screen.

However, the desktop is completely covered by the conventional screen saving image. Thus, the screen still needs to be unlocked by a limited mode when the user wants to view some parts of the desktop, and this causes inconvenience and less interesting for the user using the apparatus.

### Summary

To solve the problems in the conventional arts, it is a primary object of the present invention to provide a screen unlocking method and an electronic apparatus thereof to solve the problem that the screen needs to be unlocked by touching a specific icon shown on the screen and dragging the icon toward a limited direction with a limited path.

To achieve the above object, a screen unlocking method according to the present invention applicable to an electronic apparatus having a touch-controlled screen is provided. the method comprises the following steps of: displaying a first frame over a second frame on the touch-controlled screen, wherein at least one movable icon is included in the first frame, and the icon shows a part of the second frame; touching the icon and dragging the icon with a random direction and a random dragging path, and the part of the second frame shown by the icon being enlarged or reduced according to the direction and the dragging path: determining if a dragging-condition of the icon is matched with any one of the unlocking-conditions: and displaying the whole second frame when the dragging-condition of the dragged icon is matched with one of the unlocking-conditions.

Wherein when the dragging-condition of the dragged icon is not matched with any one of the unlocking-conditions, then the part of the second frame shown by the icon is enlarged or reduced according to the direction and the dragging path, and then the icon goes back to an original position before being touched while the icon is not touched.

Wherein when the final position of the dragged icon is at one side of the touch-controlled screen. then the dragging-condition of the dragged icon is matched with one of the unlocking-conditions.

Wherein when the final position of the dragged icon is not at any side of the touch-controlled screen, and the velocity of the dragged icon is higher than a velocity threshold value and the distance that the icon being dragged is higher than a distance threshold value, then the dragging-condition of the dragged icon is matched with one of the unlocking-conditions.

Wherein the icon could be an animation.

To achieve the above object. an electronic apparatus according to the present comprises a touch-controlled and a control module. The touch-controlled screen displays a first frame over a second frame, and at least one movable icon which shows a part of the second frame is included in the first frame. The control module enlarges or reduces the part of the second frame shown by the icon after the icon being touched and dragged with a random direction and a random dragging path, and then determines whether a dragging-condition of the dragged icon is matched with any one of the unlocking-conditions. The control module further controls the touch-controlled screen displaying the whole second frame when the dragging-condition of the dragged icon is matched with one of the unlocking-conditions.

Wherein when the dragging-condition of the dragged icon is not matched with any one of the unlocking-conditions, then the part of the second frame shown by the icon is enlarged or reduced according to the direction and the dragging path by the control module, and then the control module controls the icon to go back to an original position before being touched while the icon is not touched.

Wherein when the final position of the dragged icon is at one side of the touch-controlled screen, then the dragging-condition of the icon is matched with one of the unlocking-conditions.

Wherein when the final position of the dragged icon is not at any side of the touch-controlled screen, and the velocity of the dragged icon is higher than a velocity threshold value and the distance that the icon being dragged is higher than a distance threshold value, then the dragging-condition of the icon is matched with one of the unlocking-conditions.

Wherein the icon could be an animation.

With the above arrangements, the electronic apparatus and the screen unlocking method thereof according to the present invention has one or more of the following advantages:

(1) It may be more convenient and interesting for the user using the touch-controlled screen when the screen is locked by a movable icon that shows some parts of the desktop.

(2) The convenience and flexibility could be raised when determining whether the screen is being unlocked according to the dragging speed, final position and dragging distance of a movable icon touched and dragged by a user.

With these and other objects, advantages, and features of the invention that may become hereinafter apparent, the nature of the invention may be more clearly understood by reference to the detailed description of the invention, the embodiments and to the several drawings herein.

### Brief description of the drawings

The exemplary embodiment(s) of the present invention will be understood more fully from the detailed description given below and from the accompanying drawings of various embodiments of the invention, which, however, should not be taken to limit the invention to the specific embodiments, but are for explanation and understanding only.
**Figure 1** is a schematic diagram that illustrates the conventional touch-controlled screen unlocking method:
**Figure 2** is a block diagram of the electronic apparatus in accordance to the present invention:
**Figure 3** is an embodiment schematic diagram of the electronic apparatus in accordance to the present invention;
**Figure 4** is the first embodiment schematic diagram that illustrates a moveable icon being dragged of the electronic apparatus in accordance to the present invention;
**Figure 5** is the second embodiment schematic diagram that illustrates a moveable icon being dragged of the electronic apparatus in accordance to the present invention;
**Figure 6** is a flow chart that illustrates the unlocking method in accordance to the present invention; and
**Figure 7** is flow chart that illustrates the unlocking method of determining if the dragging-condition is matched with the unlocking condition in accordance to the present invention.

### Detailed Description

Exemplary embodiments of the present invention are described herein in the context of a screen unlocking method and an electronic apparatus thereof.

Those of ordinary skilled in the art will realize that the following detailed description of the exemplary embodiment(s) is illustrative only and is not intended to be in any way limiting. Other embodiments will readily suggest themselves to such skilled persons having the benefit of this disclosure. Reference will now be made in detail to implementations of the exemplary embodiment(s) as illustrated in the accompanying drawings. The same reference indicators will be used throughout the drawings and the following detailed description to refer to the same or like parts.

In accordance with the embodiment(s) of the present invention, the components, process steps, and/or data structures described herein may be implemented using various types of operating systems, computing platforms, computer programs, and/or general purpose machines. In addition, those of ordinary skill in the art will recognize that devices of a less general purpose nature, such as hardwired devices. field programmable gate arrays (FPGAs), application specific integrated circuits (ASICs), or the like may also be used without departing from the scope and spirit of the inventive concepts disclosed herein. Where a method comprising a series of process steps is implemented by a computer or a machine and those process steps can be stored as a. series of instructions readable by the machine, they may be stored on a tangible medium such as a computer memory device (e.g., ROM (Read Only Memory). PROM (Programmable Read Only Memory). EEPROM (Electrically Erasable Programmable Read Only Memory), FLASH Memory, Jump Drive, and the like), magnetic storage medium (e.g., tape, magnetic disk drive. and the like), optical storage medium (e.g., CD-ROM, DVD-ROM. paper card and paper tape. and the like) and other known types of program memory

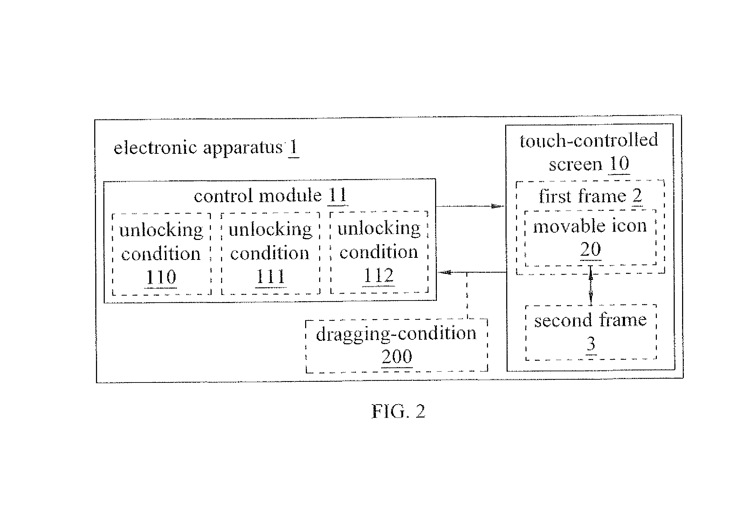

Please refer to figure 2, which is the block diagram of the electronic apparatus in accordance to the present invention, As shown in the figure, the electronic apparatus 1 according to the present invention comprises a touch-controlled screen 10 and a control module 11. The touch-controlled screen 10 displays a first frame 2 over a second frame 3. and at least one movable icon 20 which shows a part of the second frame 3 is included in the first frame 2. The control module 11 enlarges or reduces the part of the second frame 3 shown by the icon 20 after the icon 20 is touched and dragged with a random direction and a random dragging path. and then determines whether a dragging-condition 200 of the dragged icon 20 is matched with any one of the unlocking-conditions 110 111 112. The control module 11 further controls the touch-controlled screen 10 displaying the whole second frame 3 when the dragging-condition 200 of the dragged icon 20 is matched with one of the unlocking-conditions 110 111 112, when the dragging-condition 200 of the dragged icon 20 is not matched with any one of the unlocking-conditions 110 111 112. then the part of the second frame 3 shown by the icon 20 is enlarged or reduced according to the direction and the dragging path by the control module 11 and then the control module 11 controls the icon 20 to go back to an original position before being touched while the icon 20 is not touched. When the final position of the dragged icon 20 is at one side of the touch-controlled screen 10. then the dragging-condition 200 of the icon 20 is matched with one of the unlocking-conditions 110 111 112. When the final position of the dragged icon 20 is not at any side of the touch-controlled screen 10. and the velocity of the dragged icon 20 is higher than a velocity threshold value and the distance that the icon 20 is dragged is higher than a distance threshold value, then the dragging-condition 200 of the icon 20 is matched with one of the unlocking-conditions 110 111 112. The icon 20 could further be an animation.

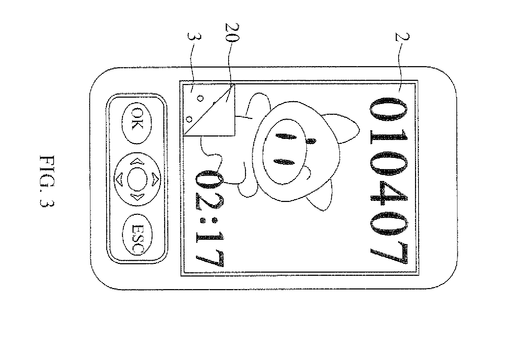

Please refer to figure 3, which is an embodiment schematic diagram of the electronic apparatus in accordance to the present invention. In this embodiment, the electronic apparatus according to the present invention could be a smart touch-controlled cell phone having a touch-controlled screen. As shown in this figure, the electronic apparatus is in the state that the screen is locked, and most of the parts of screen show the first frame 2. The first frame 2 could be a screen saving image. However, at the lower-left corner of the first frame 2. there is a movable icon 20. The movable icon 20 looks like a paper being flipped from the corner. Between the movable icon 20 and the lower-left corner of the touch-controlled screen part of the second frame 3 is displayed, and the second frame 3 is the desktop. Thus, a user could view part of the desktop by the movable icon flipping part of the first frame 2 (screen saving image). In doing so, the user could know the updated situation of programs on the desktop such as the new mail notification, the instant messages notification, the clock or the stock price vibration without unlocking the locked screen to protect the screen from bring false touched.

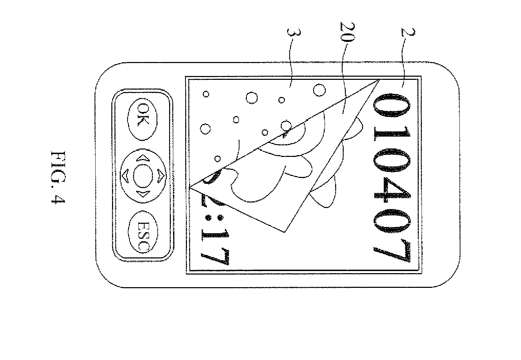

Please refer to figure 4, which is the first embodiment schematic diagram that illustrates a moveable icon being dragged of the electronic apparatus in accordance to the present invention. As shown in this figure, after the user touching the movable icon 20 shown in figure 3. the movable icon 20 is further dragged with a random direction and a random path. At this time, the part of the second frame 3 (desktop) shown between the movable icon 20 and the lower-left corner of the touch-controlled is enlarged according to the direction and the path. By doing so, the user could arbitrarily enlarge or shrink the area that displays the desktop covered by the screen saving image. So the user could view any region of the desktop without completely unlocking the screen. In addition, when the user stop touching the movable icon 20, the movable icon will come back to the original position. The original position is located at site that the movable icon is not touched as shown in figure 3.

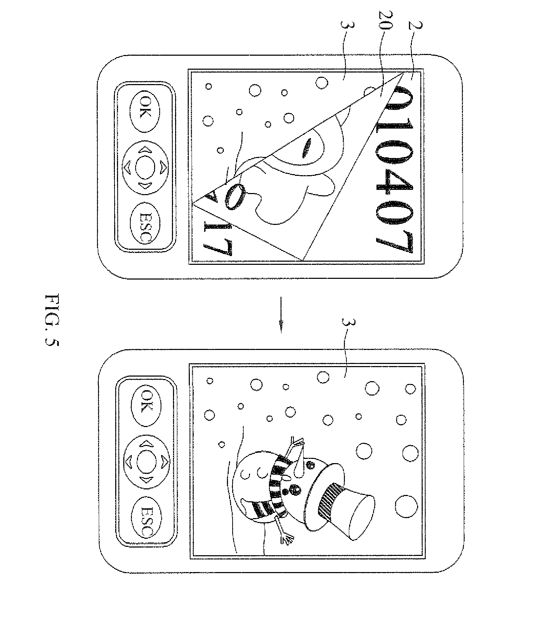

Please refer to figure 5, which is the second embodiment schematic diagram that illustrates a moveable icon being dragged of the electronic apparatus in accordance to the present invention. As shown in this figure and figure 1. the control module of the electronic apparatus according to the present invention simultaneously start to determines whether the position coordinates of the movable icon 20 coincident with any sides of the touch-controlled screen when the user touches the movable icon 20 as shown in figure 3 and drags the movable icon 20 with random direction and path. In this embodiment, the final position of the movable icon 20 is coincident with the right side of the touch-controlled screen. At this time, the control module determines the dragging-condition of the dragged icon 20 is matched with one of the unlocking-conditions, thus the control module controls the touch-controlled screen 10 displaying the whole second frame 3 (desktop).

When the position of the movable icon 20 is not coincident with any sides of the touch-controlled screen 10, the control module then determines if unlocks the touch-controlled screen 10 according to weather the velocity of the dragged icon 20 is higher than a velocity threshold value and the distance that the icon 20 being dragged is higher than a distance threshold value, Please refer to the following table:

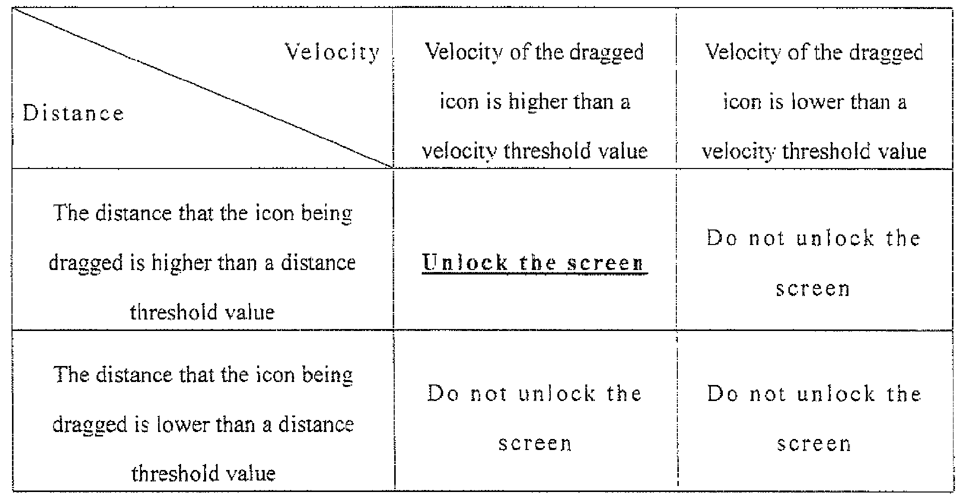

When the velocity of the dragged icon 20 is higher than the velocity threshold value and the distance that the icon 20 being dragged is higher than the distance threshold value, the dragging-condition of the icon 20 is matched with one of the unlocking-conditions, thus the control module controls the touch-controlled screen to unlock the screen and display the whole second frame (desktop). The distance that the icon being dragged could be a linear displacement of the movable icon 20 or a curve path length.

Besides, the movable icon 20 is not limited to the types as shown in figure 2∼ 5 and it can be presented as an animation such as a flowing river. falling leafs or a car-dog fighting.

The concept of the screen unlocking method in accordance to the present invention is simultaneously described in the description of the electronic apparatus disclosed in the present invention, but in order to get clearer the following will still illustrate the flow chart of the screen unlocking method.

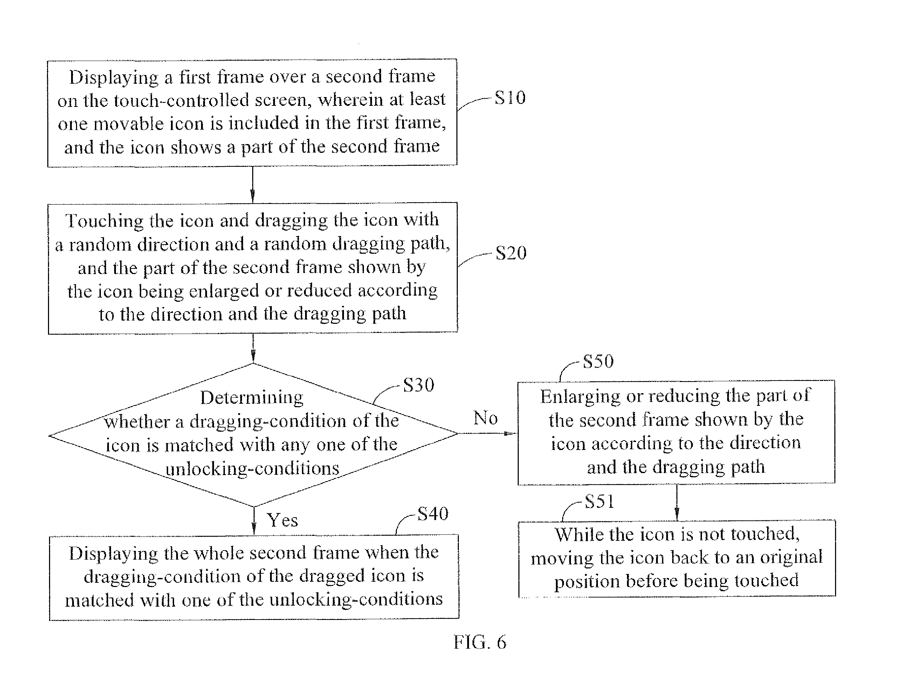

Please refer to figure 6, which is a flow chart that illustrates the unlocking method in accordance to the present invention. As shown in this figure, the unlocking method is applicable to a electronic apparatus having a touch-controlled screen, the method comprises the following steps of: (S10) displayings a first frame over a second frame on the touch-controlled screen, wherein at least one movable icon is included in the first frame, and the icon shows a part of the second frame: (S20) touching the icon and dragging the icon with a random direction and a random dragging path, and the part of the second frame shown by the icon being enlarged or reduced according to the direction and the dragging path: (S30) determining if a dragging-condition of the icon is matched with any one of the unlocking-conditions; and (S40) displaying the whole second frame when the dragging-condition of the dragged icon is matched with one of the unlocking-conditions.

When in the step (S30), the dragging-condition of the icon is not matched with any one of the unlocking-conditions, go to step (S50) enlarging or reducing the part of the second frame shown by the icon according to the direction and the dragging path: and (S51) while the icon is not touched, moving the icon back to an original position before being touched.

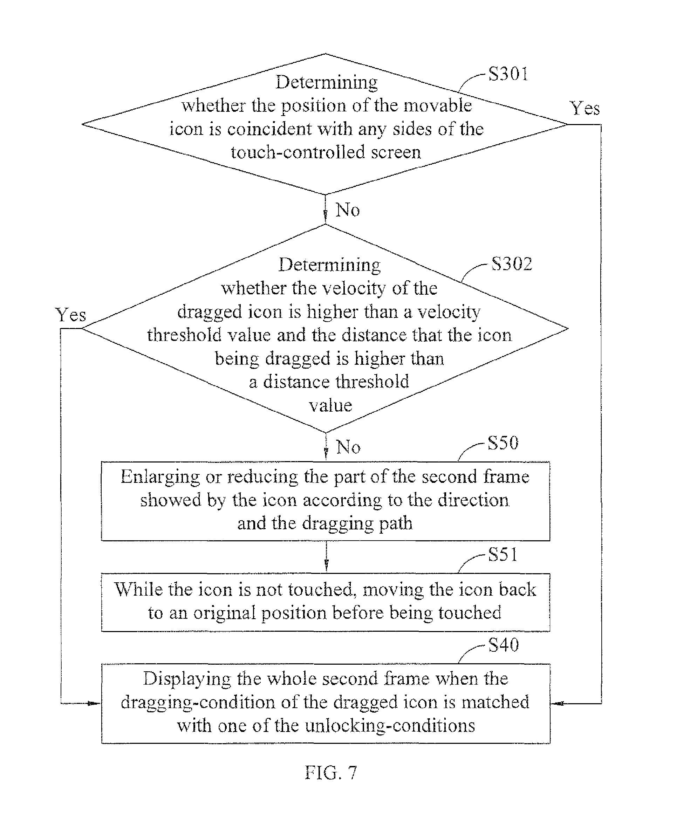

Please refer to figure 7, which is flow chart that illustrates the unlocking method of determining if the dragging-condition is matched with the unlocking condition in accordance to the present invention. The step (S30) further comprises the following steps of: (S301) determining if the position of the movable icon is coincident with any sides of the touch-controlled screen; and (S302) determining if the velocity of the dragged icon is higher than a velocity threshold value and the distance that the icon being dragged is higher than a distance threshold value.

According to the determining condition aforementioned, the user can freely unlock the touch-controlled screen without being limited to drag an icon with a specific direction and path; moreover, the present invention could further partially unlock the screen to display part of the desktop, and there is no need to view the whole data on desktop by completely unlocking the screen.

While particular embodiments of the present invention have been shown and described, it will be obvious to those skilled in the art that, based upon the teachings herein. changes and modifications may be made without departing from this invention and its broader aspects. Therefore, the appended claims are intended to encompass within their scope of all such changes and modifications as are within the true spirit and scope of the exemplary embodiment(s) of the present invention.

## Claims

1. A screen unlocking method applied for an electronic apparatus (1) having a touch-controlled screen (10), comprising the steps of:
displaying a first frame (2) over a second frame (3) on the touch-controlled screen (10). wherein at least one movable icon (20) is included in the first frame (2), and the icon (20) shows a part of the second frame (3);
touching the icon (20) and dragging the icon (20) with a random direction and a random dragging path, and the part of the second frame (3) shown by the icon (20) being enlarged or reduced according to the direction and the dragging path;
determining whether a dragging-condition of the icon (20) is matched with any one of the unlocking-conditions (110, 111, 112): and
displaying the whole second frame (3) when the dragging-condition of the dragged icon (20) is matched with one of the unocking-conditions (110, 111, 112).

2. The screen unlocking method of claim 1. wherein when the dragging-condition of the dragged icon (20) is not matched with any one of the unlockin-conditions (110, 111, 112) then the part of the second frame (3) shown by the icon (20) is enlarged or reduced according to the direction and the dragging path and then the icon (20) goes back to an original position before being touched while the icon (20) is not touched.

3. The screen unlocking method of claim 1, wherein when the final position of the dragged icon (20) is at one side of the touch-controlled screen (10), then the dragging-condition of the dragged icon (20) is matched with one of the unlocking-conditions (110, 111, 112).

4. The screen unlocking method of claim 1. wherein when the final position of the dragged icon (20) is not at any side of the touch-controlled screen (10), and the velocity of the dragged icon (20) is higher than a velocity threshold value and the distance that the icon (20) being dragged is higher than a distance threshold value. then the dragging-condition of the dragged icon (20) is matched with one of the unlocking-conditions (110, 111, 112).

5. The screen unlocking method of claim 1. 2, 3 or 4, wherein the icon (20) is an animation.

6. An electronic apparatus (1), comprising:
a touch-controlled screen (10) displaying a first frame (2) over a second frame (3), and at least one movable icon (20) which shows a part of the second frame (3) being included in the first frame (2); and
a control module (11) enlarging or reducing the part of the second frame (3) shown by the icon (20) after the icon (20) being touched and dragged with a random direction and a random dragging path, and then determining if a dragging-condition of the dragged icon (20) is matched with any one of the unlocking-conditions (110, 111. 112);
wherein the control module (11) controls the touch-controlled screen (10) displaying the
whole second frame (3) when the dragging-condition of the dragged icon (20) is matched with one of the unlocking-conditions (110, 111, 112).

7. The electronic apparatus (1) of claim 6, wherein when the dragging-condition of the dragged icon (20) is not matched with any one of the unlocking-conditions (110, 111, 112). then the part of the second frame (3) shown by the icon (20) is enlarged or reduced according to the direction and the dragging path by the control module (11), and then the control module (11) controls the icon (20) to go back to an original position before being touched while the icon (20) is not touched.

8. The electronic apparatus (1) of claim 6, wherein when the final position of the dragged icon (20) is at one side of the touch-controlled screen (10), then the dragging-condition of the icon (20) is matched with one of the unlocking-conditions (110, 111, 112).

9. The electronic apparatus (1) of claim 6, wherein when the final position of the dragged icon (20) is not at any side of the touch-controlled screen (10). and the velocity of the dragged icon (20) is higher than a velocity threshold value and the distance that the icon (20) being dragged is higher than a distance threshold value, then the dragging-condition of the icon (20) is matched with one of the unlocking-conditions (110, 111, 112).

10. The electronic apparatus (1) of claim 6, 7, 8 or 9, wherein the icon (20) is an animation.
